# EUROPEAN PATENT SPECIFICATION

(11) **EP 3 160 658 B1**
(45) Date of publication and mention of the grant of the patent: **02.12.2020**
(21) Application number: 15730505.3
(22) Date of filing: 22.06.2015
(51) Int. Cl.: B05D 7/00, C09D 167/02

(54) **A COATING SYSTEM**
BESCHICHTUNGSSYSTEM
SYSTÈME DE REVÊTEMENT

(30) Priority: 26.06.2014 EP 14174568
(43) Date of publication of application: 03.05.2017
(73) Proprietor: PPG Industries Ohio, Inc., Cleveland, OH 44111 (US)
(72) Inventor: SMETS, Gregory, F-76700 Gonfreville l'Orcher (FR); MARAL, Jean-Luc, F-76700 Gonfreville l'Orcher (FR); ACHIBET, Jamal, F-76700 Gonfreville l'Orcher (FR)
(74) Representative: Appleyard Lees IP LLP
(86) International application number: PCT/EP2015/063974
(87) International publication number: WO 2015/197552

(56) References cited:
- WO-A1-2008/137562
- US-A1- 2007 036 903

## Description

The present invention relates to a coating system. More specifically, the present invention relates to a coating system for food containers.

Food containers are commonly in the form of a metal can. Typically, cans comprise an outer metal structure formed either from two or three pieces adjoined by welding to form a body and a lid. An inner coating formed from a polymeric resin is generally applied to the exposed inner surfaces of the can. The inner coating generally prevents or reduces interaction between the outer metal structure and the contents of the can.

Modern can coatings have advanced from the use of simple tin layers or natural plant oils to the use of various polymeric blends comprising different resins, crosslinkers, solvents and other components. Often, the coatings comprise thin thermoset polymer films comprising a thermoset resin and a crosslinker.

The coatings, as well as the coating compositions used to form the coatings, are designed to have certain properties such as being capable of high speed application, having excellent adhesion to the substrate, being safe for food contact, and having properties, after curing, that are suitable for their end use, such as low migration.

Many of the coating compositions currently used for food and beverage containers contain bisphenol A (BPA), which may migrate from the coating during use. BPA is perceived as being harmful to human health and it is therefore desirable to eliminate it from coatings for food and/or beverage packaging containers. Derivatives of BPA such as diglycidyl ethers of bisphenol A (BADGE), epoxy novolak resins and polyols prepared from BPA and bisphenol F (BPF) are also problematic. Therefore there is a desire to provide coating compositions for food and beverage containers which are free from BPA, BADGE and/or other derivatives, but which retain the required properties as described above Coating systems comprising an undercoat and an overcoat, which are free of BPA, BADGE, BPF and BFDGE, are known from WO2008137562 and US2007036903.

It is an object of aspects the present invention to address one or more of the above mentioned, or other, problems.

According to a first aspect of the present invention there is provided a coating system comprising
an undercoat composition comprising
   at least 50wt% by weight of solids of a polyester (co)polymer;
   a cross linking material therefor
an overcoat composition comprising
   a polyvinyl chloride (PVC) (co)polymer
   5 to 80wt% by weight of solids of a polyester (co)polymer
   a cross linking material therefor
wherein the coating system is substantially free from BPA, BADGE, BPF and BFDGE, and wherein the coating system is substantially free of acrylic monomers, oligomers and polymers.

Advantageously, it has been found that the present invention results in reduced migration than previously known coating systems for the internal surfaces of food cans, for example lids of food cans. Further, the coating system of the present invention does not require the use of acrylic monomers. It has been found that the monomers used to form the polymers of the present invention are less toxic than the acrylic monomers. It has also been known for acrylic containing coating systems to produce allergic reactions. It has further been found that there is less smell and improved taste of the stored food when no acrylic is used in the coating system. Coating systems according to the present invention provide protection from corrosion, and have been found to ease the tooling of the metal that will form the can end.

The overcoat composition may typically comprise an organosol usually comprising two phases in a liquid carrier. For example, the two phases may comprise a dispersed phase and an at least partially dissolved phase. The dispersed phase may comprise PVC (co)polymer. The at least partially dissolved phase may comprise the polyester (co)polymer. Suitably, the polyester (co)polymer is substantially dissolved in the liquid carrier.

Unless indicated otherwise, the features relating to polyester (co)polymers provided herein may independently apply to the polyester (co)polymer(s) of the undercoat composition and/or the polyester (co)polymer(s) of the overcoat composition.

The compositions may comprise any suitable type of polyester (co)polymer. The polyester (co)polymers may typically be derived from at least one type of polyol esterified with at least one type of polyacid or anhydride. In each composition, a single type of polyester (co)polymer or a mixture of different types of polyester (co)polymer may be used.

Suitably, the polyester (co)polymers may be prepared by condensation (esterification) according to known processes (for example, Zeno Wicks, Jr., Frank N. Jones and S. Peter Pappas, Organic Coatings: Science and Technology, Vol. 1, pp. 122-132 (John Wiley & Sons: New York, 1992)). Typically, the polyester (co)polymers may be prepared from an aromatic or aliphatic polycarboxylic acid or anhydride, and an aromatic or aliphatic diol, triol, or polyol.

"Polyacid" and like terms as used herein, refers to a compound having two or more carboxylic acid groups, such as two, three or four acid groups, and includes an ester of the polyacid (wherein one or more of the acid groups is esterified) or an anhydride. The polyacid is suitably an organic polyacid.

Suitably, the carboxylic acid groups of the polyacid may be connected by a bridging group selected from: an alkylene group; an alkenylene group; an alkynylene group; or an arylene group.

The polyester (co)polymer may be formed from polyacids or anhydrides selected from one more of, but not limited to, maleic acid, fumaric acid, itaconic acid, decanoic diacid, dodecaonic diacid, 5-tert-butylisophthalic acid,succinic acid, adipic acid, phthalic acid, 5-terz-butyl isophthatic acid, tetrahydrophthalic acid, hexahydrophthalic acid, endomethylenetetrahydrophthalic acid, azelaic acid, sebacic acid, tetrachloro-phthalic acid, chlorendic acid, isophthalic acid, trimellitic acid, terephthalic acid, a naphthalene dicarboxylic acid, naphthalene tetracarboxylic acid, methylhexahydrophthalic acid, dimethyl terephthalate, cyclohexane-dicarboxylic acid (such as 1,3-cyclohexane dicarboxylic acid; 1,4-cyclohexane dicarboxylic acid), tricyclodecane polycarboxylic acid, endoethylene hexahydrophthalic acid, cyclohexanetetra carboxylic acid, cyclobutane tetracarboxylic acid, glutaric acid, anhydrides and acids of all the aforementioned acid and combinations thereof.

In certain embodiments, the polyester (co)polymer, typically a polyester (co)polymer of the overcoat composition, may be formed from one or more dicarboxylic acids and their esterifiable derivatives. For example, selected from, but not limited to, one or more of phthalic acid, isophthalic acid, terephthalic acid, 1,4-cyclohexanedicarboxylic acid, succinic acid, sebacic acid, methyltetrahydrophthalic acid, methylhexahydrophthalic acid, tetrahydrophthalic acid, dodecanedioic acid, adipic acid, azelaic acid, naphthalenedicarboxylic acid, pyromellitic acid and/or dimer fatty acids, acid anhydrides thereof and/or C₁-C₁₀ alkyl esters, for example methyl esters.

Suitably, the polyester (co)polymer, typically a polyester (co)polymer of the overcoat composition, may be formed from one or more of terephthalic acid and/or isophthalic acid.

In certain embodiments, the polyester (co)polymer, typically a polyester (co)polymer of the overcoat composition, may be formed from terephthalic acid.

"Polyol" and like terms, as used herein, refers to a compound having two or more hydroxyl groups, such as two, three or four hydroxyl groups. In certain embodiments, the hydroxyl groups of the polyol may be connected by a bridging group selected from: an alkylene group; an alkenylene group; an alkynylene group; or an arylene group. Suitably the polyol is an organic polyol.

The polyester (co)polymer may be formed from any suitable polyol. Suitable examples include, but are not limited to one or more of the following: alkylene glycols, such as ethylene glycol; propylene glycol; diethylene glycol; dipropylene glycol; triethylene glycol; tripropylene glycol; hexylene glycol; polyethylene glycol; polypropylene glycol and neopentyl glycol; hydrogenated bisphenol A; cyclohexanediol; propanediols including 1,2-propanediol; 1,3-propanediol; butyl ethyl propanediol; 2-methyl-1,3-propanediol; and 2-ethyl-2-butyl-1,3-propanediol; butanediols including 1,4-butanediol; 1,3-butanediol; and 2-ethyl-1,4-butanediol; pentanediols including trimethyl pentanediol and 2-methylpentanediol; cyclohexanedimethanol; hexanediols including 1,6-hexanediol; caprolactonediol (for example, the reaction product of epsilon-capro lactone and ethylene glycol); hydroxyalkylated bisphenols; polyether glycols, for example, poly(oxytetramethylene) glycol; trimethylol propane; pentaerythritol; di-pentaerythritol; trimethylol ethane; trimethylol butane; dimethylol cyclohexane; glycerol and the like, isopropylidene bis(p-phenylene-oxopropanol-2), or combinations thereof.

In certain embodiments, the polyester (co)polymer may be formed from an unsaturated polyol. Suitable examples include, but are not limited to one or more of the following: trimethylol propane monoallyl ether; trimethylol ethane monoallyl ether; prop-1-ene-1,3-diol or combinations thereof.

In certain embodiments, the polyester (co)polymer, typically a polyester (co)polymer of the overcoat composition, may be formed from one or more diols, for example, one or more of, but not limited to, ethylene glycol, propylene glycol (1,2- and/or 1,3-propanediol), diethylene glycol, dipropylene glycol, triethylene glycol, tetraethylene glycol, 1,4-butanediol, 1,3-butylethylpropanediol, 2-methyl-1,3-propanediol, 1,5-pentanediol, cyclohexanedimethanol, glycerol, 1,6-hexanediol, neopentyl glycol, pentaerythritol, trimethylolethane, trimethylolpropane, 1,4-benzyldimethanol and -ethanol, 2,4-dimethyl-2-ethylhexane-1,3-diol, and mixtures thereof.

Suitably, the polyester (co)polymer, typically a polyester (co)polymer of the overcoat composition, may be formed from one or more diols selected from neopentyl glycol, ethylene glycol, cyclohexane dimethanol and/or 1,2-propanediol.

In certain embodiments, the polyester (co)polymer, typically a polyester (co)polymer of the overcoat composition, may be formed from 1,2-propanediol;
Suitably, the polyester (co)polymer, typically a polyester (co)polymer of the overcoat composition, may be formed from terephthalic acid and 1,2-propanediol.

The polyester (co)polymer may be formed from any suitable molar ratio of polyacid to polyol. In certain embodiments, the molar ratio of polyacid to polyol in the high molecular weight polyester (co)polymer may be from about 20:1 to 1:20, suitably from about 10:1 to 1:10, such as from about 5:1 to 1:5, or even from about 2:1 to 1:2. Suitably, the molar ratio of polyacid to polyol in the second weight polyester (co)polymer may be 1:1.

In certain embodiments, the polyester (co)polymer may optionally be formed from one or more additional monomers. Suitably, the polyester (co)polymer may optionally be formed from one or more additional monomers selected from monoacids; monohydric alcohols; polyacids; polyhydric alcohols; or combinations thereof. Suitably, the optional additional monomers may be organic.

In certain embodiments, the polyester (co)polymer may optionally be formed from an additional monoacid. Suitably, the monoacid may be an organic monoacid.

The polyester (co)polymer may optionally be formed from any suitable additional monoacid. Suitable examples include, but are not limited to one or more of the following: benzoic acid; cyclohexane carboxylic acid; tricyclodecane carboxylic acid; camporic acid; benzoic acid; t-butyl benzoic acid; C₁-C₁₈ aliphatic carboxylic acids such as acetic acid; propanoic acid; butanoic acid; hexanoic acid; oleic acid; linoleic acid; undecanoic acid; lauric acid; isononanoic acid; fatty acids; hydrogenated fatty acids of naturally occurring oils; esters and/or anhydrides of any of the aforementioned acids and combinations thereof.

In certain embodiments, the polyester (co)polymer may optionally be formed from an additional monohydric alcohol. Suitably, the monohydric alcohol may be an organic monohydric alcohol.

The polyester (co)polymer may optionally be formed from any suitable additional monohydric alcohol. Suitable examples include but are not limited to one or more of the following: benzyl alcohol; hydroxyethoxybenzene; methanol; ethanol; propanol; butanol; pentanol; hexanol; heptanol; dodecyl alcohol; stearyl alcohol; oleyl alcohol; undecanol; cyclohexanol; phenol; phenyl carbinol; methylphenyl carbinol; cresol; monoethers of glycols; halogen-substituted or other substituted alcohols and combinations thereof.

The polyester (co)polymer may optionally be formed from any suitable molar ratio of polyacid + polyol to one or more additional monomer. In certain embodiments, the polyester (co)polymer may comprise a molar ratio of polyacid + polyol to one or more additional monomer of from about 100:1 to about 1:1, suitably from about 100:1 to about 5:1, such as from about 100:1 to 20:1, or even from about 100:1 to 50:1.

In certain embodiments, the polyester (co)polymer may be formed from commercially available polyester (co)polymers. Suitable commercially available polyester (co)polymers include, but are not limited to the following: the SKYBON (registered trademark) line of polyester resins commercially available from SK Chemicals, 310, Pangyo-rog, Bundang-gu, Seongnam-si, Gyeonggi-do 463-400 Korea such as ES-660.

The reaction to form the polyester (co)polymer and/or the polyester (co)polymer may be performed in the presence of an esterification catalyst. Suitable examples of esterification catalysts include, but are not limited to one or more of the following: tin, titanium and zinc catalysts such as dibutyl tin oxide (DBTO); stannous chloride; stannous oxalate; stannous octoate; butyl stannoic acid; tetra-n-butyl titanate; tetra isopropyl titanate; zinc acetate; zinc stearate and combinations thereof.

In certain embodiments, the polyester (co)polymer contains one or more functional groups selected from hydroxyl and/or carboxyl.

The polyester (co)polymer may have any suitable gross hydroxyl value (OHV). In certain embodiments, the polyester (co)polymer may have a gross OHV from about 0 to 100 KOH/g. Suitably, the polyester (co)polymer may have a gross OHV from about 0 to 50 KOH/g, such as from about 0 to 30 KOH/g or even from about 0 to 20 KOH/g. In certain embodiments, the polyester (co)polymer may have an AV from about 2 to 150 KOH/g, such as about 2 to 50 KOH/g, or about 2 to 30 KOH/g or even from about 2 to 20 KOH/g, or 2 to 15 KOH/g. In certain embodiments, the polyester (co)polymer may have a gross OHV from about 0 to 20 mg KOH/g, such as from about 5 to 10 mg KOH/g, suitably from about 2 to 5 mg KOH/g. Suitably, the gross OHV is expressed on solids.

The polyester (co)polymer may have any suitable acid value (AV). In certain embodiments, the polyester (co)polymer may have an AV from about 0 to 150 KOH/g. Suitably, the polyester (co)polymer may have an AV from about 0 to 50 KOH/g, such as from about 0 to 30 KOH/g or even from about 0 to 20 KOH/g, or 0 to 15 KOH/g. In certain embodiments, the polyester (co)polymer may have an AV from about 0 to 20 mg KOH/g, such as from about 5 to 10 mg KOH/g, suitably from about 2 to 5 mg KOH/g. Suitably, the AV is expressed on solids.

The polyester (co)polymer may have any suitable weight-average molecular weight (Mw). In certain embodiments, the polyester (co)polymer may have an Mw of from about 2,000 to 100,000 Da, suitably from about 6,000 Da to about 50,000 Da, or 10,000 to 40,000 Da.

In certain embodiments, the polyester (co)polymer, typically a polyester (co)polymer of the overcoat composition, may have an Mw of at least about 6,100 Daltons, suitably at least about 8,000 Da, such as at least about 10,000 Da, or even about 15,000 Da. In certain embodiments, the polyester (co)polymer, typically a polyester (co)polymer of the overcoat composition, may have an Mw of up to about 50,000 Da, suitably about 100,000 Da, such as about 150,000 Da, or even up to about 200,000 Da. Suitably, the polyester (co)polymer, , typically a polyester (co)polymer of the overcoat composition, may have an Mw from about 6,100 Da to about 200,000 Da, suitably from about 8,000 Da to about 200,000 Da, such as from about 10,000 Da to about 200,000 Da, or even from about 15,000 Da to about 200,000 Da. Suitably, the polyester (co)polymer, typically a polyester (co)polymer of the overcoat composition, may have an Mw from about 6,100 Da to about 150,000 Da, suitably from about 8,000 Da to about 150,000 Da, such as from about 10,000 Da to about 150,000 Da, or even from about 15,000 Da to about 150,000 Da. Suitably, the polyester (co)polymer, typically a polyester (co)polymer of the overcoat composition, may have an Mw from about 6,100 Da to about 100,000 Da, suitably from about 8,000 Da to about 100,000 Da, such as from about 10,000 Da to about 100,000 Da, or even from about 15,000 Da to about 100,000 Da. Suitably, the polyester (co)polymer, typically a polyester (co)polymer of the overcoat composition, may have an Mw from about 6,100 Da to about 50,000 Da, suitably from about 8,000 Da to about 50,000 Da, such as from about 10,000 Da to about 50,000 Da, or even from about 15,000 Da to about 50,000 Da.

The polyester (co)polymer may have any suitable number-average molecular weight (Mn). In certain embodiments, the polyester (co)polymer may have a Mn of between 1,000 to 30,000 Da, such as between 3,000 to 25,000 Da, suitably between 5,000 to 20,000 Da.

In certain embodiments, the polyester (co)polymer, typically a polyester (co)polymer of the overcoat composition, may have an Mn of from about 6,000 to 100,000 Da, suitably from about 7,000 Da to about 50,000 Da, such as from about 8,000 Da to about 25,000 Da, or even from about 8,500 Da to about 20,000 Da.

In certain embodiments, the polyester (co)polymer, typically a polyester (co)polymer of the overcoat composition, may have an Mn of at least about 6,000 Da, suitably at least about 6,000 Da, suitably at least about 7,000, such as at least about 8,000 Da. In certain embodiments, the polyester (co)polymer, typically a polyester (co)polymer of the overcoat composition, may have an Mn of up to about 100,000 Da, suitably up to about 50,000 Da, such as up to about 25,000 Da, or even up to about 20,000 Da. Suitably, the polyester (co)polymer, typically a polyester (co)polymer of the overcoat composition, may have an Mn from about 6,100 Da to about 100,000 Da, suitably from about 7,000 Da to about 100,000 Da, such as from about 8,000 Da to about 100,000 Da, or even from about 8,500 to 100,000 Da. Suitably, the polyester (co)polymer, typically a polyester (co)polymer of the overcoat composition, may have an Mn from about 6,100 Da to about 50,000 Da, suitably from about 7,000 Da to about 50,000 Da, such as from about 8,000 Da to about 50,000 Da, or even from about 8,500 to 50,000 Da. Suitably, the polyester (co)polymer, typically a polyester (co)polymer of the overcoat composition, may have an Mn from about 6,100 Da to about 25,000 Da, suitably from about 7,000 Da to about 25,000 Da, such as from about 8,000 Da to about 25,000 Da, or even from about 8,500 to 25,000 Da. Suitably, the polyester (co)polymer, typically a polyester (co)polymer of the overcoat composition, may have an Mn from about 6,100 Da to about 20,000 Da, suitably from about 7,000 Da to about 20,000 Da, such as from about 8,000 Da to about 20,000 Da, or even from about 8,500 to 20,000 Da.

In certain embodiments, the polyester (co)polymer, typically a polyester (co)polymer of the overcoat composition, may have a number-average molecular weight (Mn) of from about 6,100 to 50,000 Da, suitably from about 6,250 Da to about 30,000 Da, such as from about 6,500 Da to about 30,000 Da, or even from about 8,500 Da to about 20,000 Da.

In certain embodiments, the polyester (co)polymer, typically a polyester (co)polymer of the overcoat composition, may have an Mn of at least about 6,100 Da, suitably at least about 6,250 Da, more suitably at least 6,500 Da, such as at least about 7,000 Da, or even at least about 8,000 Da. In certain embodiments the polyester (co)polymer, typically a polyester (co)polymer of the overcoat composition, may have an Mn of up to about 50,000 Da, suitably up to about 30,000 Da, or even up to about 20,000 Da. Suitably, the polyester (co)polymer, typically a polyester (co)polymer of the overcoat composition, may have an Mn from about 6,100 Da to about 50,000 Da, suitably from about 6,250 Da to about 50,000 Da, such as from about 6,500 Da to 50,000 Da, such as from about 7,000 Da to 50,000 Da, or even from about 8,000 Da to 50,000 Da. Suitably, the polyester (co)polymer, typically a polyester (co)polymer of the overcoat composition, may have an Mn from about 6,100 Da to about 20,000 Da, suitably from about 6,250 Da to about 30,000 Da, such as from about 6,500 Da to 30,000 Da, such as from about 7,000 Da to 30,000 Da, or even from about 8,000 Da to 30,000 Da. Suitably, the polyester (co)polymer, typically a polyester (co)polymer of the overcoat composition, may have an Mn from about 6,100 Da to about 20,000 Da, suitably from about 6,250 Da to about 20,000 Da, such as from about 6,500 Da to 20,000 Da, such as from about 7,000 Da to 20,000 Da, or even from about 8,000 Da to 20,000 Da.

Techniques to measure the number-average molecular weight will be well known to a person skilled in the art. Suitably, the Mn may be determined by gel permeation chromatography using a polystyrene standard according to ASTM D6579-11 ("Standard Practice for Molecular Weight Averages and Molecular Weight Distribution of Hydrocarbon, Rosin and Terpene Resins by Size Exclusion Chromatography". UV detector; 254nm, solvent: unstabilised THF, retention time marker: toluene, sample concentration: 2mg/ml). A person skilled in the art will appreciated that techniques to measure the number-average molecular weight may also be applied to measure the weight-average molecular weight.

The polyester (co)polymer suitably has a low degree of branching. The polyester (co)polymer may be substantially linear or be slightly branched. For example, the degree of branching of the polyester (co)polymer may be measured by the polydispersity index of the said polyester (co)polymer. The polydispersity index of a polymer is given by the ratio of Mw to Mn (Mw/Mn), wherein Mw is the weight-average molecular weight and Mn is the number average molecular weight. Suitably, the polydispersity index of the polyester (co)polymer, typically a polyester (co)polymer of the overcoat composition, may be from about 1 to 20, suitably from about 2 to 10.

The polyester (co)polymer may have any suitable glass transition temperature (Tg). In certain embodiments, the second polyester may have a Tg of from about 10 to 150 °C, suitably from about 40 to 150 °C, or 50 to 150°C, such as from about 60 to 120 °C, or 20 to 120°C, such as 30 to 100°C. In certain embodiments, the polyester (co)polymer, typically a polyester (co)polymer of the overcoat composition, may have a Tg of at least about 80 °C. In certain embodiments, the polyester (co)polymer, typically a polyester (co)polymer of the overcoat composition, may have a Tg of up to 100 °C, suitably up to about 120 °C, or even up to about 150 °C. Suitably, the polyester (co)polymer, typically a polyester (co)polymer of the overcoat composition, may have a Tg from about 80 °C to 150 °C, more suitably from about 80 °C to 120 °C.

Methods to measure Tg will be well known to a person skilled in the art. Suitably, the Tg is measured according to ASTM D6604-00(2013) ("Standard Practice for Glass Transition Temperatures of Hydrocarbon Resins by Differential Scanning Calorimetry". Heat-flux differential scanning calorimetry (DSC), sample pans: aluminium, reference: blank, calibration: indium and mercury, sample weight: 10mg, heating rate: 20°C/min).

In certain embodiments, the polyester (co)polymer, typically a polyester (co)polymer of the overcoat composition, may comprise the reaction product of;
(i) 1,2-propanediol,
(ii) terephthalic acid, and
(iii) a molecular weight increasing agent,
wherein the polyester (co)polymer has a number-average molecular weight (Mn) of at least about 6,100 Da and a glass transition temperature (Tg) of at least about 80 °C.

Therefore, according to a second aspect of the present invention there is provided a coating system comprising;
(i) an undercoat composition comprising
   a. at least 50wt% by weight of solids of a polyester (co)polymer; and
   b. a cross linking material therefor,
(ii) an overcoat composition comprising
   a. a polyvinyl chloride (PVC) (co)polymer;
   b. 5 to 50wt% by weight of solids of a polyester (co)polymer comprising the reaction product of;
      (i) 1,2-propanediol,
      (ii) terephthalic acid, and
      (iii) a molecular weight increasing agent,
      wherein the polyester (co)polymer has a number-average molecular weight (Mn) of at least 6,100 Da and a glass transition temperature (Tg) of at least about 80 °C; and
(iv) a cross linking material therefor;
wherein the coating system is substantially free from BPA, BADGE, BPF and BFDGE, and wherein the coating system is substantially free of acrylic monomers, oligomers and polymers.

By "molecular weight increasing agent" we mean a substance that increases the number-average molecular weight (Mn) of the high molecular weight polyester (co)polymer.

The molecular weight increasing agent may be any suitable compound capable of increasing the Mn of the high molecular weight polyester (co)polymer. Suitably, the molecular weight increasing agent may comprise a polyacid, a polyol or a combination thereof.

In certain embodiments, the molecular weight increasing agent may comprise a polyacid. Suitably, the molecular weight increasing agent may comprise a diacid.

In certain suitable embodiments, the molecular weight increasing agent comprises a diacid of general formula (I)

ROOC-Xₙ-COOR formula (I)

wherein each R independently represents hydrogen or an alkyl, alkenyl, alkynyl, or aryl group;
n = 0 or 1; and wherein X represents a bridging group selected from: an alkylene group; an alkenylene group; an alkynylene group; an arylene group; wherein the bridge between the -COOR groups is C₁ or C₂.

Suitable examples of polyacid molecular weight increasing agents include, but are not limited to one or more of the following: oxalic acid; malonic acid; succinic acid; orthophthalic acid; maleic acid; fumaric acid; itaconic acid; methylmalonic acid; ethylmalonic acid; propylmalonic acid; 2-methylsuccinic acid; 2-ethylsuccinic acid; 2-propylsuccinic acid; trans-cyclopentane-1,2-dicaboxylic acid; cis- cyclopentane-1,2-dicaboxylic acid; trans-cyclohexane-1,2-dicaboxylic acid; cis-cyclohexane-1,2-dicaboxylic acid; acids and anhydrides of all the aforementioned acids and combinations thereof. In certain embodiments, the polyacid comprises maleic anhydride or itaconic acid or a combination thereof.

Suitably, the polyacid molecular weight increasing agent comprises maleic anhydride.

In certain embodiments, the molecular weight increasing agent may comprise a polyol. Suitably, the molecular weight increasing agent may comprise a triol.

In certain embodiments, the hydroxyl groups of the polyol molecular weight increasing agents may be connected by a C₁ to C₃ alkylene group. The C₁ to C₃ alkylene group may be substituted or unsubstituted. The C₁ to C₃ alkylene group may be optionally substituted with one or more of the following: halo; hydroxyl; nitro; mercapto; amino; alkyl; alkoxy; aryl; sulfo and sulfoxy groups. The C₁ to C₃ alkylene group may be linear or branched. The C₁ to C₃ alkylene group may be saturated or unsaturated.

In certain embodiments, there may be no more than 3 carbon atoms connecting between the hydroxyl groups.

Suitable examples of polyol molecular weight increasing agents include, but are not limited to one or more of the following: methylene glycol; ethylene glycol; propylene glycol; neopentyl glycol; 1,2-propanediol; butyl ethyl propanediol; 2-methyl-1,3-propanediol; 2-ethyl-2-butyl-1,3-propanediol; trimethylolmethane; trimethylolethane; trimethylolpropane; glycerol; pentaerythritol; and combinations thereof. Suitably, the polyol molecular weight increasing agent comprises trimethylolpropane.

The terephthalic acid (ii) may be in any suitable form. It will be well known to a person skilled in the art that terephthalic acid is often provided in a form which also contains isophthalic acid as a contaminant. However, in one embodiment, the terephthalic acid may be provided in a form which is substantially free of isophthalic acid. By "substantially free" we mean to refer to terephthalic acid which contains less than about 5 wt% isophthalic acid, preferably less than about 2 wt% isophthalic acid, more preferably less than about 0.05 wt% isophthalic acid. In certain embodiments the terephthalic acid may contain about 0 wt% isophthalic acid.

In certain embodiments, the polyester (co)polymer of the overcoat composition according to the second aspect of the present invention may comprise any suitable molar ratio of (i)+(ii):(iii). In certain embodiments the (i)+(ii):(iii) may range from about 100:1 to 1:1, such as from about 80:1 to 5:1. As a non-limiting example, when the molecular weight increasing agent is a polyacid the molar ratio of (i)+(ii):(iii) may be about 25:1. As a further non-limiting example, when the molecular weight increasing agent is a polyol the molar ratio of (i)+(ii):(iii) may be about 80:1.

Suitably, the Mw of the polyester (co)polymer is higher than the Mn.

In certain embodiments, the polyester (co)polymer may have a low degree of branching. The polyester (co)polymer of the overcoat composition according to the second aspect of the present invention may be substantially linear or be slightly branched. For example, the degree of branching of the polyester (co)polymer may be measured by the polydispersity index of the said high molecular weight polyester (co)polymer. The polydispersity index of a polymer is given by the ratio of Mw to Mn (Mw/Mn), wherein Mw is the weight-average molecular weight and Mn is the number average molecular weight. Suitably, the polydispersity index of the polyester (co)polymer is from about 1 to 20, suitably from about 2 to 10.

In certain embodiments, the polyester (co)polymer may have a molecular weight above the entanglement molecular weight of said high molecular weight polyester (co)polymer.

"Entanglement molecular weight" and like terms, as used herein, refers to the molecular weight at which the high molecular weight polyester (co)polymer becomes large enough to entangle. For the avoidance of doubt the molecular weight may be the number-average molecular weight or the weight-average molecular weight. Entanglement molecular weight is typically defined as the molecular weight at which the physical properties, especially the viscosity of the polyester (co)polymer change.

Typically, the entanglement molecular weight is determined by plotting the log of the melt viscosity against the log of the molecular weight of a polymer. Typically, as the molecular weight increases, the plot follows a gently upward sloping linear path. However, once the entanglement molecular weight is reached, the gently sloping linear path increases to a rapidly sloping linear path. Hence the entanglement molecular weight may be determined as the point on the plot where the slope changes from gently sloping to rapidly sloping.

Techniques to measure the melt viscosity will be well known to a person skilled in the art. Suitably, the melt viscosity may be measured at a high shear rate such as that applied by a cone and plate rheometer, typical methods are as described in standard methods such as ASTM D4287. Films formed from the polyester (co)polymer according to the present invention having a molecular weight above the critical entanglement molecular weight of the said polyester (co)polymer, were found to have superior film forming properties.

The components (i), (ii) and (iii) of the polyester (co)polymer according to the second aspect of the present invention may be contacted in any order.

In certain embodiments, the polyester (co)polymer according to the second aspect of the present invention may be prepared in a one step process. Suitably, in a one step process, the components (i), (ii) and (iii) are all reacted together at the same time. Suitably, the polyester (co)polymer according to the second aspect of the present invention may be prepared in a one step process where the molecular weight increasing agent comprises a polyol.

Suitably, in a one step process, components (i), (ii) and (iii) may be contacted together at a first reaction temperature, T1, wherein T1 may be a temperature of between about 90°C and 260°C, suitably from about 200°C to 250°C, such as from about 200°C to 230°C.

Typically, in a one step process, the reaction is allowed to proceed for a total period of about 1 minute to 100 hours, such as from about 2 hours to 80 hours. It will be appreciated by a person skilled in the art that the reaction conditions may be varied depending on the reactants used.

The term "alk" or "alkyl", as used herein unless otherwise defined, relates to saturated hydrocarbon radicals being straight, branched, cyclic or polycyclic moieties or combinations thereof and contain 1 to 20 carbon atoms, preferably 1 to 10 carbon atoms, more preferably 1 to 8 carbon atoms, still more preferably 1 to 6 carbon atoms, yet more preferably 1 to 4 carbon atoms. These radicals may be optionally substituted with a chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by one or more oxygen or sulphur atoms, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which would be represented as -CH₃, becomes methylene, -CH₂-, when represented as an alkylene. Other alkylene groups should be understood accordingly.

The term "alkenyl", as used herein, relates to hydrocarbon radicals having one or several, preferably up to 4, double bonds, being straight, branched, cyclic or polycyclic moieties or combinations thereof and containing from 2 to 18 carbon atoms, preferably 2 to 10 carbon atoms, more preferably from 2 to 8 carbon atoms, still more preferably 2 to 6 carbon atoms, yet more preferably 2 to 4 carbon atoms. These radicals may be optionally substituted with a hydroxyl, chloro, bromo, iodo, cyano, nitro, OR¹⁹, OC(O)R²⁰, C(O)R²¹, C(O)OR²², NR²³R²⁴, C(O)NR²⁵R26, SR²⁷, C(O)SR²⁷, C(S)NR²⁵R²⁶, or aryl, wherein R¹⁹ to R²⁷ each independently represent hydrogen, aryl or alkyl, and/or be interrupted by one or more oxygen or sulphur atoms, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH₂, becomes ethenylene, -CH=CH-, when represented as an alkenylene. Other alkenylene groups should be understood accordingly.

The term "alkynyl", as used herein, relates to hydrocarbon radicals having one or several, preferably up to 4, triple bonds, being straight, branched, cyclic or polycyclic moieties or combinations thereof and having from 2 to 18 carbon atoms, preferably 2 to 10 carbon atoms, more preferably from 2 to 8 carbon atoms, still more preferably from 2 to 6 carbon atoms, yet more preferably 2 to 4 carbon atoms. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶ or aryl, wherein R¹⁹ to R²⁷ each independently represent hydrogen, aryl or lower alkyl, and/or be interrupted by one or more oxygen or sulphur atoms, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as -C≡CH, becomes ethynylene, -C≡C-, when represented as an alkynylene. Other alkynylene groups should be understood accordingly.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by one or more oxygen or sulphur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

For the avoidance of doubt, the reference to alkyl, alkenyl, alkynyl, aryl or aralkyl in composite groups herein should be interpreted accordingly, for example the reference to alkyl in aminoalkyl or alk in alkoxyl should be interpreted as alk or alkyl above etc.

The undercoat composition contains at least 50 wt%, for example, at least 60 wt% or 70 wt% of polyester (co)polymer based on the total weight of the solids of the composition. The undercoat composition may contain up to 95 wt%, such as up to 90 wt% or 80 wt% of polyester (co)polymer, based on the total weight of the solids of the composition. Typically, the undercoat composition may contain between 50 wt% and 95 wt%, such as between 50 wt% and 90 wt%, for example between 50 wt% and 80wt% of polyester (co)polymer, based on the total weight of the solids of the composition.

The overcoat composition may contain at least 7 wt%, such as at least 9 wt% of polyester (co)polymer, based on the total weight of the solids of the composition. The overcoat composition may contain up to 70 wt%, such as up to 60 wt% or 50 wt% of polyester (co)polymer, for example up to 50 wt% or 40wt% or 30 wt%, based on the total weight of the solids of the composition. Typically, the overcoat composition may contain between 7 wt% to 70 wt% of polyester (co)polymer, more typically between 7 wt% to 60wt% or 7 wt% to 50 wt%, such as 9 wt% to 40 wt%, or 9 wt% to 35 wt% or 9 wt% to 30 wt% of polyester (co)polymer based on the total weight of the solids of the composition.

The undercoat and overcoat compositions each independently comprise any suitable cross linking material. The undercoat composition cross linking material and the overcoat composition cross linking material may be the same or different. Typically, the undercoat and overcoat compositions may comprise one or more cross linking material that each contains two or more functional groups selected from, for example, hydroxyl, amino, vinyl and/or blocked-isocyanate.

Suitable cross linking materials will be well known to the person skilled in the art. Suitable cross linking materials include, but are not limited to one or more of the following: phenolic resins (or phenol-formaldehyde resins); aminoplast resins (such as triazine-formaldehyde resins); amino resins; epoxy resins; isocyanate resins; beta-hydroxy (alkyl) amide resins; alkylated carbamate resins; polyacids; anhydrides; organometallic acid-functional materials; polyamines; polyamides and combinations thereof.

Suitably, the cross linking material may comprise an aminoplast crosslinker containing at least two amino functional groups, a phenoloplast cross-linker containing at least two hydroxyl groups, a blocked isocyanate crosslinker containing at least two blocked isocynate groups or a combination thereof.

Non-limiting examples of phenolic resins are those formed from the reaction of a phenol with formaldehyde. Non-limiting examples of phenols which may be used to form phenolic resins are phenol, butyl phenol, xylenol and cresol. General preparation of phenolic resins is described in "The Chemistry and Application of Phenolic Resins or Phenoplasts", Vol V, Part I, edited by Dr Oldring; John Wiley and Sons/Cita Technology Limited, London, 1997. Suitably, the phenolic resins are of the resol type. Suitable examples of commercially available phenolic resins include, but are not limited to PHENODUR® PR285 and PR612 and resins sold under the trademark BAKELITE® such as BAKELITE 6572 LB.

Non-limiting examples of aminoplast resins include those which are formed from the reaction of a triazine such as melamine or benzoguanamine with formaldehyde, for example, or those formed from the reaction of urea with formaldehyde. Suitably, the resultant compounds may be etherified with an alcohol such as methanol, ethanol, butanol or combinations thereof. The preparation and use of aminoplast resins is described in "The Chemistry and Applications of Amino Crosslinking Agents or Aminoplast", Vol V, Part II, page 21 ff., edited by Dr Oldring; John Wiley and Sons/Cita Technology Limited, London, 1998. Suitable examples of commercially available aminoplast resins include but are not restricted to those sold under the trademark MAPRENAL® such as MAPRENAL® MF980 and those sold under the trademark CYMEL® such as CYMEL 303 and CYMEL 1123, available from Cytec Industries.

The coating system may comprise a blocked isocyanate crosslinking resin having two or more isocyanate functional groups, or an isocyanate group and a vinyl group. Suitably, the blocked isocyanate may be an aliphatic and/or cycloaliphatic blocked polyisocyanate such as, for example, hexamethylene diisocyanate, isophorone diisocyanate, bis[4-isocyanatocyclohexyl]methane, tetramethylene-m-xylidene diisocyanate, isopropenyldimethyl-benzylisocyanate, dimers or trimers thereof, and combinations thereof. The blocking agents may be selected from, for example, n-butanone oxime, E-caprolactam, diethyl malonate, and secondary amines.

Suitable commercially available blocked isocyanate crosslinkers include, for example, VESTANATTM B 1358 A, VESTANATTM EP B 1186 A, VESTANATTM EP B 1299 SV (all available from Degussa Corp., Marl, Germany) and DESMODURTM BL 3175 or VPLS 2078 (available from Bayer A.G., Leverkusen, Germany).

Typically, the cross linking material may comprise a phenolic resin. For example, the cross linking material may comprise an ortho, meta, or para phenolic resin, or mixtures thereof.

Unless indicated otherwise, the cross linking materials referred to herein may independently apply to the cross linking material of the undercoat composition and/or the crosslinking material of the overcoat composition.

Typically, the undercoat coating composition may comprise between 5 to 50 wt% of cross linking material, such as between 8 to 40 wt% of cross linking material, for example between 10 to 35 wt% of cross linking material based on the total weight of the solids in the composition. The undercoat composition may comprise two or more cross linking materials of different types, for example, the undercoat composition may comprise a phenolic resin crosslinker and an aminoplast resin crosslinker. Suitably, the undercoat composition may comprise a phenolic resin crosslinker in an amount of between 2 to 15 wt%, such as between 4 to 12 wt% based on the total weight of the solids of the composition, and additionally or alternatively an aminoplast resin crosslinker in an amount of between 1 40 wt%, such as 5 to 25 wt%, or 15 to 25 wt%, based on the total weight of solids the composition.

The overcoat composition may comprise any suitable amount of cross linking material. Suitably, the overcoat composition may comprise between 2 to 30 wt% of cross linking material, for example between 2 to 25 wt% or 5 to 20 wt%, or 7 to 14 wt%of cross linking material, based on the total weight of the solids in the composition. Typically, the overcoat composition may comprise a phenolic resin crosslinker.

Suitably, the undercoat composition may comprise a higher proportion of crosslinking material than the overcoat composition, based on the total solids of each composition.

Advantageously, the coating system of the present invention may not require the use of xylenol or phenol monomers.

The overcoat composition may comprise any suitable PVC (co)polymer. Typically, the PVC (co)polymer may be a homopolymer. Optionally, the PVC may be a copolymer comprising comonomers selected from one or more of, but not limited to, vinyl chloride, vinyl acetate, dicarboxylic acids, hydroxy acrylate, dicarboxylic acid ester, maleic copolymer.

Commercial sources of a suitable PVC (co)polymer include vinnol P70F (available from Vinnolit) and Geon 178 (available from PolyOne).

The PVC (co)polymer may have any suitable average particle size. The PVC (co)polymer may have an average particle size of between 0.1µm to 1mm, for example 0,1 to 50µm typically 0,1 to 30µm.

The PVC (co)polymer may have Dv99 according to ISO 1624 of ≤100µm, such as ≤60µm.

The PVC (co)polymer may have any suitable viscosity. The PVC (co)polymer may have a viscosity of between 100 to 150 ml/g, for example between 110 and 140 ml/g, typically between 120 and 130 ml/g.

Methods to measure viscosity will be well known to a person skilled in the art. Suitably, the viscosity is measured according to DIN EN ISO 1628-2 ("Determination of the viscosity of polymers in dilute solution using capillary viscosimeters - Part 2: Poly(vinyl chloride").

The PVC (co)polymer may have any suitable bulk density. The PVC (co)polymer may have a bulk density of between 0.1 to 0.6 g/ml, for example 0.2 to 0.5 g/ml, typically 0.3 to 0.4 g/ml.

Methods to measure bulk density will be well known to a person skilled in the art. Suitably, the bulk density is measured according to DIN EN ISO 60 ("Determination of apparent density of material that can be poured from a specified funnel").

The PVC (co)polymer may have any suitable weight average molecular weight (Mw). Typically, the PVC (co)polymer may have a Mw of between 60,000 and 200,000 Da, such as between 70,000 and 150,000 Da, or between 75,000 and 140,000 Da.

The PVC (co)polymer may have a number average molecular weight (Mn) of between 40,000 and 80,000 Da, such as between 42,500 and 75,000 Da, suitably between45,000 and 72,500 Da.

The PVC (co)polymer may be present in the overcoat composition in any suitable amount. Typically, the PVC (co)polymer may be present in the overcoat composition in an amount of at least 5 wt%, more typically at least 10 wt%, most typically at least 20 wt%, based on the total weight of the solids of the composition.

The PVC (co)polymer may be present in the overcoat composition in an amount of between 10 wt% to 85 wt%, such as 15 wt% to 65 wt%, suitably 30 wt% to 60 wt%, based on the total weight of the solids of the composition.

In certain embodiments the undercoat and overcoat coating compositions may each independently further comprise a catalyst. Any catalyst typically used to catalyse crosslinking reactions between polyester (co)polymers and cross linking materials, such as for example phenolic resins, may be used. Suitable catalysts will be well known to the person skilled in the art. Suitable catalysts include, but are not limited to one or more of the following: phosphoric acid; alkyl aryl sulphonic acids such as dodecyl benzene sulphonic acid; methane sulphonic acid; para-toluene sulphonic acid; dinonyl naphthalene disulphonic acid; phenyl phosphinic acid, alkyd acid phosphate, phenyl acid phosphate and combinations thereof. In certain embodiments the catalyst may comprise an acid catalyst. In certain embodiments, the catalyst may be blocked.

Suitably, the catalyst may comprise phosphoric acid. The catalyst, when present, may be used in the coating composition in any suitable amount. In certain embodiments the catalyst, when present, may be used in amounts from about 0.001 to 10 wt%, suitably from about 0.01 to 2 wt% based on the total weight of the solids of the coating composition.

The undercoat and overcoat coating compositions according to the present invention may each optionally and independently contain an additive or combination of additives. The coating composition may optionally contain any suitable additive. Suitable additives will be well known to the person skilled in the art. Examples of suitable additives include, but are not limited to one or more of the following: lubricants; pigments; plasticisers; surfactants; flow control agents; thixotropic agents; fillers; diluents; organic solvents, rust inhibitors and combinations thereof.

Suitable lubricants will be well known to the person skilled in the art. Suitable examples of lubricants include, but are not limited to one or more of the following: carnauba wax and polyethylene type lubricants. In certain embodiments the lubricant, when present, may be used in the coating composition in amounts of at least 0.01 wt%, such as 0.1 wt%, for example between 0.1 and 5 wt% or between 0.1 and 1 wt% based on the total weight of the solids of the coating composition.

Suitable pigments will be well known to the person skilled in the art. A suitable pigment may be, for example, titanium dioxide. The pigment, when present, may be used in one or more of the coating compositions in any suitable amount. In certain embodiments, a pigment may be used in a coating composition in amounts up to about 70 wt%, such as up to about 40 wt%, or even up to about 10 wt% based on the total weight of the solids of the coating composition.

Suitable plasticisers will be well known to the person skilled in the art. A suitable plasticiser may include epoxide resin plasticisers. The plasticiser, when present, may be used in one or more of the coating compositions in any suitable amount. For example, a plasticiser may be used in a coating composition in amounts of between 0.1 and 35 wt%, such as between 0.1 and 15 wt%, for example between 1 and 3 wt% based on the total weight of the solids of the coating composition. Typically, the overcoat composition comprises a plasticiser, suitably an epoxide resin plasticiser.

Surfactants may optionally be added to one or both of the undercoat and overcoat coating compositions in order to aid in flow and wetting of the substrate. Suitable surfactants will be well known to the person skilled in the art. Suitably the surfactant, when present, may be chosen to be compatible with food and/or beverage container applications. Suitable surfactants include, but are not limited to one or more of the following: alkyl sulphates (e.g., sodium lauryl sulphate); ether sulphates; phosphate esters; sulphonates; and their various alkali, ammonium, amine salts; aliphatic alcohol ethoxylates; alkyl phenol ethoxylates (e.g. nonyl phenol polyether); salts and/or combinations thereof. The surfactants, when present, may be present in amounts from about 0.001 wt% to 10 wt%, typically 0.01 wt% to 5 wt%, for example 0.01 to 2 wt% based on the total weight of the solids of the coating composition.

The undercoat and overcoat coating compositions may each independently further comprise one or more solvents. The coating compositions may each independently comprise a single solvent or a mixture of solvents. Typically, the coating compositions each comprise an organic solvent.

Suitable organic solvents include, but are not limited to one or more of the following: aliphatic hydrocarbons such as mineral spirits and high flash point naphtha; aromatic hydrocarbons such as benzene ; toluene; xylene; solvent naphtha 100, 150, 200; those available from Exxon-Mobil Chemical Company under the SOLVESSO trade name; alcohols such as ethanol; n-propanol; isopropanol; n-butanol; and diacetone alcohol, ketones such as acetone; cyclohexanone; methylisobutyl ketone; methyl ethyl ketone and isophorone; esters such as ethyl acetate; butyl acetate; n-hexyl acetate; glycols such as butyl glycol; glycol ethers such as methoxypropanol; ethylene glycol monomethyl ether; ethylene glycol monobutyl ether, water and combinations thereof.

The solvent, when present, may suitably be used in the undercoat compositions in amounts from about 10 to 90 wt%, such as from about 20 to 80 wt% , typically from about 30 to 70 wt% based on the total weight of the coating composition.

The solvent, when present, may suitably be used in the overcoat compositions in amounts from about 20 to 75 wt%, such as from about 30 to 70 wt%, typically from about 35 to 60 wt% based on the total weight of the coating composition.

Unless indicated otherwise, the catalyst, additive and solvent properties provided herein may independently apply to the catalyst(s), additive(s) and solvent(s) of the undercoat composition and/or the catalyst(s), additive(s) and solvent(s) of the overcoat composition.

The undercoat composition may have a solid content of 10 to 60 wt% such as 25 to 55 wt%, typically 30 to 45 wt%.

The overcoat composition may have a solid content of 20 to 70 wt%, such as 20 to 60 wt%, or 30 to 55 wt%, typically 40 to 50 wt%.

The undercoat composition may have a viscosity ISO6 25°C of 50 to 100, typically 60 to 90, suitably 70 to 80.

The overcoat composition may have a viscosity ISO6 25°C of 50 to 105, typically 60 to 95, suitably 70 to 90. Suitably, the overcoat composition has a higher viscosity than the undercoat composition.

The coating system of the present invention is substantially free from BPA and derivatives thereof. In certain embodiments, the coating system invention may be essentially free or may be completely free of BPA and. Derivatives of BPA include, for example, bisphenol A diglycidyl ether (BADGE).

The coating system according to the present invention is substantially free from bisphenol F (BPF) and derivatives thereof. In certain embodiments, the coating system may be essentially free or may be completely free of bisphenol F (BPF) and derivatives thereof. Derivatives of bisphenol F include, for example, bisphenol F diglycidyl ether (BFDGE).

The overcoat composition is substantially free, essentially free or completely free of acrylic monomers, oligomers and/or polymers. The coating system according to the present invention is substantially free, essentially free or completely free of acrylic monomers, oligomers and/or polymers.

The coating system according to the present invention may be substantially free, may be essentially free or may be completely free of isocyanate compounds.

The compounds or derivatives thereof mentioned above (such as in relation to BPA, BPF; acrylic monomers, oligomers and/or polymers; and isocyanate) may not be added to the composition intentionally but may be present in trace amounts because of unavoidable contamination from the environment. By "substantially free" as used herein we mean to refer to coating compositions containing less than about 1000 parts per million (ppm) of any of the compounds or derivatives thereof mentioned above. By "essentially free" we mean to refer to coating compositions containing less than about 100 ppm of any of the compounds or derivatives thereof mentioned above. By "completely free" we mean to refer to coating compositions containing less than about 20 parts per billion (ppb) of any of the compounds or derivatives thereof.

The coating system according to the present invention may be applied to any suitable food and/or beverage container or components used to fabricate such containers. Suitably, the undercoat and overcoat coating compositions may be applied to food and/or beverage cans. Examples of cans include, but are not limited to one or more of the following, two-piece cans, three-piece cans and the like. Typically, the coating system maybe applied to at least a portion of the internal surface of a lid of a food and/or beverage container.

The coating system according to the present invention may be applied to the food and/or beverage container by any suitable method. Methods of applying said coating compositions will be well known to a person skilled in the art. Suitable application methods include, but are not limited to one or more of the following, spray coating, roll coating, dipping and/or electrocoating. It will be appreciated by a person skilled in the art that for two-piece cans, one or more of the coating compositions may typically be applied by spray coating after the can is made. It will also be appreciated by the person skilled in the art that for three-piece cans, a flat sheet may typically be roll coated with one or more of the present coating compositions first and then the can may be formed. However, the application of the coating compositions may not limited to these methods. The coating compositions according to the present information may be applied to the interior and/or exterior surface or surfaces of the container. Suitably, all or part of the surface may be covered.

The undercoat and overcoat coating compositions according to the present invention may each independently be applied to any suitable dry film thickness. In certain embodiments the coating compositions may each independently be applied to a dry film thickness from about 2 to 20 gsm, suitably from about 5 to 15 gsm, more suitably from about 7 to 12 gsm, or even from about 8 to 10 gsm.

The coating system according to the present invention may be applied on top of a primer layer

Further coating layers may be applied to the coating layers formed by the present coating system. For example, sealant, PU dispersion in water or ecoat repair varnish.

According to a third aspect of the present invention there is provided a food or beverage container having a coating on at least a portion thereof, the coating being derived from a coating system comprising
an undercoat composition comprising
   at least 50wt% by weight of solids of a polyester (co)polymer;
   a cross linking material therefor;
an overcoat composition comprising
   a polyvinyl chloride (PVC) (co)polymer;
   5 to 80wt% by weight of solids of a polyester (co)polymer;
   a cross linking material therefor;
wherein the coating system is substantially free from BPA, BADGE, BPF and BFDGE, and wherein the coating system is substantially free of acrylic monomers, oligomers and polymers.

According to a fourth aspect of the present invention there is provided a lid for a food or beverage container having a coating on at least a portion thereof, the coating being derived from a coating system, comprising
an undercoat composition comprising
   at least 50wt% by weight of solids of a polyester (co)polymer;
   a cross linking material therefor
an overcoat composition comprising
   a polyvinyl chloride (PVC) (co)polymer
   5 to 80wt% by weight of solids of a polyester (co)polymer
   a cross linking material therefor
wherein the coating system is substantially free from BPA, BADGE, BPF and BFDGE,
and wherein the coating system is substantially free of acrylic monomers, oligomers and polymers.

Typically, the coating system may be present on at least a portion of the internal face of a food can, typically the lid, for example the lid of an easy open end can.

The lid may be formed of any suitable material. Typically, the lid comprises steel or tinplated steel. The lid may contain chromium or may substantially not contain chromium.

According to a fifth aspect of the present invention there is provided the use of a coating system comprising
an undercoat composition comprising
   at least 50wt% by weight of solids of a polyester (co)polymer;
   a cross linking material therefor
an overcoat composition comprising
   a polyvinyl chloride (PVC) (co)polymer
   5 to 80wt% by weight of solids of a polyester (co)polymer
   a cross linking material therefor
wherein the coating system is substantially free from BPA, BADGE, BPF and BFDGE,
and wherein the coating system is substantially free of acrylic monomers, oligomers and polymers, to reduce migration of the components of the coating system out of a cured coating system.

Suitably, migration in water containing 3% acetic acid over 4 hours at 100°C is less than 2 mg/dm², such as less than 1.5 mg/dm². Suitably, migration in 50% ethanol over 4 hours at 100°C is less than 5.5 mg/dm², such as less than 4 mg/dm², for example less than 3 mg/dm². Suitably, migration in olive oil over 2 hours at 175°C is less than 12.5 mg/dm² such as less than 8 mg/dm², for example less than 5 mg/dm².

Where used herein, "wt%" is in relation to the solid content of the composition, unless specifically stated otherwise.

Use herein of the singular includes the plural and plural encompasses singular, unless specifically stated otherwise. For example, the use of the singular, i.e. "a" or "an", includes "one or more". In addition, the use herein of "or" means "and/or" unless specifically stated otherwise, even though "and/or" may be explicitly used in certain instances.

All of the features contained herein may be combined with any of the above aspects in any combination.

For a better understanding of the invention, and to show how embodiments of the same may be carried into effect, reference will now be made, by way of example only, to the following embodiments.

### Example 1

### Undercoat composition preparation

An undercoat composition having the components of table 1 was prepared by loading solvents 1a and 1b into a reactor with stirring and heating. To the solvents was added resin 1. The reaction mixture was heated to 80°C under stirring until the resin 1 was fully dissolved. Once dissolution was complete the reaction mixture was cooled down to 25-30°C. Once cooled, wax 2 was homogenised before being added to the reaction mixture under stirring. The reaction mixture was stirred such as to maintain good dispersion of the wax in the resin. Stirring was continued until no agglomerates of more than 20µm were present in the blend. Components 3, 4 and 5 were then loaded into the reaction mixture under stirring. Components 6 and 7 were blended together and added to the reaction mixture under stirring. Components 8 and 9 where then blended together and added to the reaction mixture under stirring. Components 10 and 11 where then loaded into the reaction mixture under stirring. Viscosity was adjusted to the desired level with component 12 before the reaction mixture was filtered with a 25µm set.

**Table 1 - Components of undercoat composition**

| **No.** | **Component** | **% by weight** |
|---|---|---|
| 1 | Dynapol L952 | 25.53 |
| 1a | Solvesso 100 | 32.72 |
| 1b | Dowanol PM | 14.69 |
| 2 | Cerafak 186 | 0.28 |
| 3 | Uramex BF891 | 6.56 |
| 4 | Cymel 1123 | 2.61 |
| 5 | PR285 | 4.59 |
| 6 | XK 406 | 0.14 |
| 7 | Xylene | 0.78 |
| 8 | Nacure 5925 | 0.09 |
| 9 | Xylene | 0.83 |
| 10 | Lanoline 15% | 0.92 |
| 11 | Xylene | 8.26 |
| 12 | Xylene | 2.02 |
| | Total | 100 |

| | | |
|---|---|---|
| Viscosity ISO6 25°C 70-80s, solid content 33-35% | | |

Dynapol L952 = polyester resin (available from Evonik)
Solvesso 100 = light aromatic solvent
Dowanol PM = methoxy propanol (available from Dow)
Cerafak 186 = Wax (available from Byk)
Uramex BF891 = butylated benzoguanamine-formaldehyde resin (available from Ineos)
Cymel 1123 = methylated/ethylated benzoguanamine-formaldehyde resin (available from Cytec)
PR285 = phenolic resin (available from Allnex)
XK 406 = blocked phosphoric acid (available from Allnex)
Nacure 5925 = amine neutralised dodecylbenzene sulphonic acid (available from King)
Lanoline 15% = a solution of lanoline in aromatic hydrocarbons with 15wt% of solids

### Overcoat composition preparation

Solvents 1a and 1b were loaded into a reactor with stirring and heating. Resin 1 was then added to the reaction mixture. The reaction mixture was heated up to 80°C under stirring until the resin was fully dissolved. Once dissolution was complete the reaction mixture was cooled down to 25-30°C. Components 2 and 3 were then homogenised in drums and used to adjust the viscosity of the reaction mixture during the addition of component 4. Component 4 was loaded slowly under sufficient stirring to obtain a powder dispersion with no agglomerates bigger than 30µm in the blend. .After the temperature of the reaction mixture has decreased to the relevant temperature 30-40°C resin 7 and plasticiser 8 were added to the reaction mixture under stirring. Waxes 9 and 10 were then homogenised before loading into the reaction mixture. Stirring was increased to disperse the wax. A catalytic solution of components 11 and 12 was then added under stirring. The viscosity was adjusted to the desired level by the addition of solvent 13. The reaction mixture was then filtered with a 10 to 50µm set.

**Table 2 - Components of overcoat composition**

| **No.** | **Component** | **% by weight** |
|---|---|---|
| 1 | Dynapol L952 | 14.67 |
| 1a | S100 | 13.06 |
| 1b | Dowanol PM | 5.6 |
| 2 | Solvesso 100 | 6.90 |
| 3 | Butyl glycol | 6.90 |
| 4 | Vinnol P70 | 22.99 |
| 5 | RPDE | 8.05 |
| 6 | Solvesso 100 | 4.90 |
| 7 | PR516 | 8.62 |
| 8 | Dehysol D82 H | 1.72 |
| 9 | LubaPrint 121/H | 2.02 |
| 10 | TF1780x0.1 | 2.02 |
| 11 | H₃PO₄ | 0.06 |
| 12 | Metoxypropanol | 0.51 |
| 13 | Solvesso 100 | 2.00 |
| | Total | 100 |

| | | |
|---|---|---|
| Viscosity ISO6 25°C 75-85s, solid content 44-46% | | |

Vinnol P70 = PVC powder (available from Wacker Chemie)
RPDE = blend of siccinic, adipic and fumaric esters
PR516 = phenolic resin (available from Cytec)
Dehysol D82 H = epoxydised soya bean oil (available from BASF)
LubaPrint 121/H = hydrocarbon wax (available from Bader-Munzig)
TF1780x0.1 = PTFE-modified polyethylene wax

### Comparative example 1

The comparative example 1 coating system consists of an undercoat of PPG6100-301/A polyester coating, and an overcoat of PPG6150-301/A PVC/acrylic coating.

### Comparative example 2

The comparative example 2 system consists of an undercoat of PPG6301-805/A epoxy coating and an overcoat of PPG2212-854/A PVC/acrylic coating..

### Application of the coating systems

Inventive and comparative coating systems were prepared from the undercoat and overcoat compositions as follows.

The undercoat coating composition was applied onto a tinplated steel panel. The composition was drawn onto the substrate with a bar coater. The drawn composition was then baked for 10 min PMT in an oven at a temperature of 200°C. The thickness after polymerisation was 9gsm.

The coated panel was removed from the oven and allowed to cool before a coat of the overcoat composition was applied in the same manner as the undercoat. The thickness of the second coat after polymerisation was 9 gsm.

### Testing methods

The following testing method was applied to the substrates coated with inventive and comparative coating systems.

### Migration

Overall migration was determined according to regulation DIN 10/2011. Units are mg/dm².

### Aspect

Simple visual control is done in comparison with standard product applied in same conditions after application with bar coater at specified film weight. Checks are made for shade, regularity of flow control in the paint application, and smoothness.

### Flexibility - godet 2

The coated panel is placed under a first stamping machine that will stamp a jar sized 18x30 (HxDiam). The stamped sample is then removed from the stamping machine and embedded on a second machine that transforms the shape to a deeper drawn shape sized 26x24(HxDiam). Then jar produced is observed and the non-torn part of the varnish is measured using a straightedge. Ajar rated at 26 means that no coating has been removed from the metal.

### Sheen hardness

A coated panel of width 13 cm is placed under the moving measurement device of a Clemen Scratch Hardness Tester.

The sharp edge of the tester is contacted with the coating. If the coating does not resist to the friction, the point tears away the coating. Successive attempts are done by increasing gradually the weight on the point until the coating tears away. The plate is moved between every essay and the result is the heaviest weight before the film is scratched. The higher the value the harder the coating.

### Altek mobility

A coated panel is placed on the mobility device and a 2 kg weight is placed on the coating and connected to the strength measurement device. The dynamometer is placed on a worm driven platform that enables it to move at a speed of 20 inch/minute. The dynamometer measures the necessary strength to pull the weight on the coating. The more the coating slides the lower the value is.

### Mean porosity before processing

A coated panel is placed under a press to stamp a 70 to 73 diameter can end. Tension of the system is 6.3 volt and current is measure in mA after 4 seconds of tension. Conductivity is insured by following electrolyte:
Deionized water: 1000 g
Nacl: 5g
Potassium ferrocyanure: 10g
Sodium dioctylsulfosuccinate 65%: 1.43g

**Table 3 - Results**

| Test | | | Example 1 | Comparative example 1 | Comparative example 2 |
|---|---|---|---|---|---|
| Migration | Simulant | Conditions | | | |
| | Water + 3% acetic acid | 4 hr at 100°C | 1 | 2.3 | 2.6 |
| | 50% ethanol | 4 hr at 100°C | 2.8 | 5.6 | 6 |
| | Olive oil | 2 hr at 175°C | 4.5 | 9.8 | 10 |
| | 95% | 5h 60°C | 7 | 9,9 | 10 |
| | Ethanol | | | | |
| | Isooctane | 3h 60°C | 4 | 3.7 | 5 |
| | n-Heptane | 2 hr at 65°C | 4 | 4.7 | 5,6 |
| Aspect | | | clear gold | strong gold | clear gold |
| flexibility - godet 2 | | | 26 | 26 | 26 |
| Sheen hardness | | | 1500 | 1500 | 1300 |
| Altek mobility | | | 0,04 | 0,04 | 0,04 |
| Mean porosity before processing | | | 0,15 | 0,2 | 0,1 |

As shown by the above results, coating systems according to the present invention provide significantly reduced migration across a range of simulants compared to current systems, whilst maintaining other desirable properties.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A coating system comprising
an undercoat composition comprising
at least 50wt% by weight of solids of a polyester (co)polymer;
a cross linking material therefor
an overcoat composition comprising
a polyvinyl chloride (PVC) (co)polymer
5 to 80wt% by weight of solids of a polyester (co)polymer
a cross linking material therefor
wherein the coating system is substantially free from BPA, BADGE, BPF and BFDGE;
and wherein the coating system is substantially free of acrylic monomers, oligomers and polymers.

2. A coating system according to claim 1, wherein the overcoat composition comprises between 7 to 60 wt% by weight of solids of a polyester (co)polymer, for example 7 to 50 wt% or 9 to 35 wt% by weight of solids of a polyester (co)polymer.

3. A coating system according to any preceding claim, wherein the coating system comprises phenolic resin crosslinking material, preferably the undercoat crosslinking material and the overcoat crosslinking material comprise phenolic resin crosslinking material.

4. A coating system according to any preceding claim, wherein the polyester (co)polymer of the undercoat composition is formed from a polyacid or their esterifiable derivative and polyol, wherein the polyacid is selected from one or more of phthalic acid, isophthalic acid, terephthalic acid, 1,4-cyclohexanedicarboxylic acid, succinic acid, sebacic acid, methyltetrahydrophthalic acid, methylhexahydrophthalic acid, tetrahydrophthalic acid, dodecanedioic acid, adipic acid, azelaic acid, naphthalenedicarboxylic acid, pyromellitic acid and/or dimer fatty acids, acid anhydrides thereof and/or C₁-C₁₀ alkyl esters, for example methyl esters; and wherein the polyol is selected from one or more of ethylene glycol, propylene glycol, (1,2 and/or 1,3-propanediol), glycerol, diethylene glycol, dipropylene glycol, triethylene glycol, tetraethylene glycol, trimethylolpropane, trimethylolethane, tripropylene glycol, neopentyl glycol, pentaerythritol, 1,4-butanediol, 1,3-butylethylpropanediol, 2-methyl-1,3-propanediol, 1,5-pentanediol, cyclohexanedimethanol, 1,6-hexanediol, trimethylol propane, hexylene glycol, cyclohex-anedimethanol, a polyethylene or polypropylene glycol, isopropylidene bis(p-phenylene-oxopropanol-2), 1,4-benzyldimethanol and -ethanol, 2,4-dimethyl-2-ethylhexane-1,3-diol, and mixtures thereof, typically a polyacid selected from one or more of terephthalic acid and/or isophthalic acid and a polyol selected from one or more of neopentyl glycol, ethylene glycol,cyclohexane dimethanol and/or 1,2-propanediol.

5. A coating system according to any preceding claim, wherein the polyester (co)polymer of the overcoat composition is formed from a polyacid or their esterifiable derivative and a polyol, wherein the polyacid is selected from one or more of phthalic acid, isophthalic acid, terephthalic acid, 1,4-cyclohexanedicarboxylic acid, succinic acid, sebacic acid, methyltetrahydrophthalic acid, methylhexahydrophthalic acid, tetrahydrophthalic acid, dodecanedioic acid, adipic acid, azelaic acid, naphthalenedicarboxylic acid, pyromellitic acid and/or dimer fatty acids, acid anhydrides thereof and/or C₁-C₁₀ alkyl esters, for example methyl esters; and wherein the polyol selected from one or more of ethylene glycol, propylene glycol, (1,2 and/or 1,3-propanediol), glycerol, diethylene glycol, dipropylene glycol, triethylene glycol, tetraethylene glycol, trimethylolpropane, trimethylolethane, tripropylene glycol, neopentyl glycol, pentaerythritol, 1,4-butanediol, 1,3-butylethylpropanediol, 2-methyl-1,3-propanediol, 1,5-pentanediol, cyclohexanedimethanol, 1,6-hexanediol, trimethylol propane, hexylene glycol, cyclohex-anedimethanol, a polyethylene or polypropylene glycol, isopropylidene bis(p-phenylene-oxopropanol-2), 1,4-benzyldimethanol and -ethanol, 2,4-dimethyl-2-ethylhexane-1,3-diol, and mixtures thereof, typically, a polyacid selected from one or more of terephthalic acid and/or isophthalic acid and a polyol selected from one or more of neopentyl glycol, ethylene glycol, cyclohexane dimethanol and/or 1,2-propanediol.

6. A coating composition according to any preceding claim, wherein the polyester (co)polymer of the overcoat composition is formed from 1,2-propanediol and terephthalic acid.

7. A coating system according to any preceding claim, wherein the polyester (co)polymer of the overcoat composition comprises the reaction product of;
i. 1,2-propanediol,
ii. terephthalic acid, and
iii. a molecular weight increasing agent,
wherein the polyester (co)polymer has a number-average molecular weight (Mn) of at least 6,100 Da and a glass transition temperature (Tg) of at least 80 °C, wherein the number-average molecular weight is determined by gel permeation chromatography using a polystyrene standard according to ASTM D6579-11 ("Standard Practice for Molecular Weight Averages and Molecular Weight Distribution of Hydrocarbon, Rosin and Terpene Resins by Size Exclusion Chromatography". UV detector; 254nm, solvent: unstabilised THF, retention time marker: toluene, sample concentration: 2mg/ml) and the glass transition temperature is measured according to ASTM D6604-00(2013) ("Standard Practice for Glass Transition Temperatures of Hydrocarbon Resins by Differential Scanning Calorimetry". Heat-flux differential scanning calorimetry (DSC), sample pans: aluminium, reference: blank, calibration: indium and mercury, sample weight: 10mg, heating rate: 20°C/min).

8. A coating system according to any preceding claim, wherein the PVC (co)polymer is present in the overcoat composition in an amount of between 10 wt% to 85 wt% based on the total amount of solids of the composition.

9. A coating system according to any preceding claim, wherein the coating system is substantially free of isocyanate compounds.

10. A coating system according to any preceding claim, wherein the overcoat composition comprises a polyvinyl chloride (PVC) (co)polymer.

11. A coating system according to any preceding claim, wherein the crosslinker of the undercoat and/or overcoat are selected from one or more of the following: phenolic resins (or phenol-formaldehyde resins); aminoplast resins (such as triazine-formaldehyde resins); amino resins; epoxy resins; isocyanate resins; beta-hydroxy (alkyl) amide resins; alkylated carbamate resins; polyacids; anhydrides; organometallic acid-functional materials; polyamines; polyamides and combinations thereof.

12. A coating system according to claim 11, wherein the crosslinker of the undercoat and/or overcoat comprise a phenolic resin and an aminoplast resin.

13. A food or beverage container having a coating on at least a portion thereof, the coating being derived from a coating system according to any previous claim.

14. A lid for a food or beverage container, such as the lid of an easy open end container, having a coating on at least a portion thereof, the coating being derived from a coating system accordingly to any of claims 1 to 12, preferably the coating is present on at least a portion of an internal face of the lid.

15. Use of a coating system according to any one of claims 1 to 12 to reduce migration.

## Patentansprüche

1. Beschichtungssystem, umfassend eine
Grundierungszusammensetzung, umfassend
wenigstens 50 Gew.-% der Feststoffe an einem Polyester(co)polymer;
ein Vernetzungsmaterial dafür,
eine Deckschichtzusammensetzung, umfassend
ein Polyvinylchlorid(PVC)-(Co)polymer,
5 bis 80 Gew.-% der Feststoffe an einem Polyester(co)polymer;
ein Vernetzungsmaterial dafür,
wobei das Beschichtungssystem im Wesentlichen frei von BPA, BADGE, BPF und BFDGE ist;
und wobei das Beschichtungssystem im Wesentlichen frei von Acrylmonomeren, -oligomeren und -polymeren ist.

2. Beschichtungssystem gemäß Anspruch 1, wobei die Deckschichtzusammensetzung zwischen 7 und 60 Gew.-% der Feststoffe an einem Polyester(co)polymer, beispielsweise 7 bis 50 Gew.-% oder 9 bis 35 Gew.-% der Feststoffe an einem Polyester(co)polymer, umfasst.

3. Beschichtungssystem gemäß einem der vorstehenden Ansprüche, wobei das Beschichtungssystem Phenolharz-Vernetzungsmaterial umfasst, wobei vorzugsweise das Grundierungs-Vernetzungsmaterial und das Deckschicht-Vernetzungsmaterial Phenolharz-Vernetzungsmaterial umfassen.

4. Beschichtungssystem gemäß einem der vorstehenden Ansprüche, wobei das Polyester(co)polymer der Grundierungszusammensetzung aus einer Polysäure oder ihrem veresterbaren Derivat und Polyol gebildet ist, wobei die Polysäure ausgewählt ist aus einem oder mehreren von Phthalsäure, Isophthalsäure, Terephthalsäure, 1,4-Cyclohexandicarbonsäure, Bernsteinsäure, Sebacinsäure, Methyltetrahydrophthalsäure, Methylhexahydrophthalsäure, Tetrahydrophthalsäure, Dodecandisäure, Adipinsäure, Azelainsäure, Naphthalindicarbonsäure, Pyromellitinsäure und/oder Dimerfettsäuren, Säureanhydriden davon und/oder C₁-C₁₀-Alkylestern, beispielsweise Methylestern; und wobei das Polyol ausgewählt ist aus einem oder mehreren von Ethylenglycol, Propylenglycol, (1,2- und/oder 1,3-Propandiol), Glycerol, Diethylenglycol, Dipropylenglycol, Triethylenglycol, Tetraethylenglycol, Trimethylolpropan, Trimethylolethan, Tripropylenglycol, Neopentylglycol, Pentaerythritol, 1,4-Butandiol, 1,3-Butylethylpropandiol, 2-Methyl-1,3-propandiol, 1,5-Pentandiol, Cyclohexandimethanol, 1,6-Hexandiol, Trimethylolpropan, Hexylenglycol, Cyclohexandimethanol, einem Polyethylen- oder Polypropylenglycol, Isopropylidenbis(p-phenylenoxopropanol-2), 1,4-Benzyldimethanol und -ethanol, 2,4-Dimethyl-2-ethylhexan-1,3-diol und Gemischen davon, wobei eine Polysäure typischerweise ausgewählt ist aus einem oder mehreren von Terephthalsäure und/oder Isophthalsäure und ein Polyol ausgewählt ist aus einem oder mehreren von Neopentylglycol, Ethylenglycol, Cyclohexandimethanol und/oder 1,2-Propanediol.

5. Beschichtungssystem gemäß einem der vorstehenden Ansprüche, wobei das Polyester(co)polymer der Deckschichtzusammensetzung aus einer Polysäure oder ihrem veresterbaren Derivat und einem Polyol gebildet ist, wobei die Polysäure ausgewählt ist aus einem oder mehreren von Phthalsäure, Isophthalsäure, Terephthalsäure, 1,4-Cyclohexandicarbonsäure, Bernsteinsäure, Sebacinsäure, Methyltetrahydrophthalsäure, Methylhexahydrophthalsäure, Tetrahydrophthalsäure, Dodecandisäure, Adipinsäure, Azelainsäure, Naphthalindicarbonsäure, Pyromellitinsäure und/oder Dimerfettsäuren, Säureanhydriden davon und/oder C₁-C₁₀-Alkylestern, beispielsweise Methylestern; und wobei das Polyol ausgewählt ist aus einem oder mehreren von Ethylenglycol, Propylenglycol, (1,2- und/oder 1,3-Propandiol), Glycerol, Diethylenglycol, Dipropylenglycol, Triethylenglycol, Tetraethylenglycol, Trimethylolpropan, Trimethylolethan, Tripropylenglycol, Neopentylglycol, Pentaerythritol, 1,4-Butandiol, 1,3-Butylethylpropandiol, 2-Methyl-1,3-propandiol, 1,5-Pentandiol, Cyclohexandimethanol, 1,6-Hexandiol, Trimethylolpropan, Hexylenglycol, Cyclohexandimethanol, einem Polyethylen- oder Polypropylenglycol, Isopropylidenbis(p-phenylenoxopropanol-2), 1,4-Benzyldimethanol und -ethanol, 2,4-Dimethyl-2-ethylhexan-1,3-diol und Gemischen davon, wobei eine Polysäure typischerweise ausgewählt ist aus einem oder mehreren von Terephthalsäure und/oder Isophthalsäure und ein Polyol ausgewählt ist aus einem oder mehreren von Neopentylglycol, Ethylenglycol, Cyclohexandimethanol und/oder 1,2-Propanediol.

6. Beschichtungszusammensetzung gemäß einem der vorstehenden Ansprüche, wobei das Polyester(co)polymer der Deckschichtzusammensetzung aus 1,2-Propandiol und Terephthalsäure gebildet ist.

7. Beschichtungssystem gemäß einem der vorstehenden Ansprüche, wobei das Polyester(co)polymer der Deckschichtzusammensetzung das Reaktionsprodukt von:
i. 1,2-Propandiol,
ii. Terephthalsäure und
iii. einem molekulargewichtserhöhenden Mittel umfasst,
wobei das Polyester(co)polymer ein anzahlgemitteltes Molekulargewicht (Mn) von wenigstens 6.100 Da und eine Glasübergangstemperatur (Tg) von wenigstens 80 °C aufweist, wobei das anzahlgemittelte Molekulargewicht durch Gelpermeationschromatographie unter Verwendung eines Polystyrolstandards gemäß ASTM D6579-11 ("Standard Practice for Molecular Weight Averages and Molecular Weight Distribution of Hydrocarbon, Rosin and Terpene Resins by Size Exclusion Chromatography". UV-Detektor; 254 nm, Lösungsmittel: unstabilisiertes THF, Retentionszeitmarker: Toluol, Probenkonzentration: 2 mg/ml) bestimmt wird und die Glasübergangstemperatur gemäß ASTM D6604-00 (2013) ("Standard Practice for Glass Transition Temperatures of Hydrocarbon Resins by Differential Scanning Calorimetry". Wärmestrom-Differentialscanningkalorimetrie (DSC), Probentiegel: Aluminium, Referenz: leer, Kalibrierung: Indium und Quecksilber, Probengewicht: 10 mg, Heizrate: 20 °C/min) gemessen wird.

8. Beschichtungssystem gemäß einem der vorstehenden Ansprüche, wobei das PVC-(Co)polymer in der Deckschichtzusammensetzung in einer Menge von zwischen 10 Gew.-% und 85 Gew.-%, bezogen auf die Gesamtmenge der Feststoffe der Zusammensetzung, vorhanden ist.

9. Beschichtungssystem gemäß einem der vorstehenden Ansprüche, wobei das Beschichtungssystem im Wesentlichen frei von Isocyanatverbindungen ist.

10. Beschichtungssystem gemäß einem der vorstehenden Ansprüche, wobei die Deckschichtzusammensetzung ein Polyvinylchlorid(PVC)-(Co)polymer umfasst.

11. Beschichtungssystem gemäß einem der vorstehenden Ansprüche, wobei der Vernetzer der Grundierung und/oder Deckschicht ausgewählt ist aus einem oder mehreren der Folgenden: Phenolharzen (oder Phenol-Formaldehyd-Harzen); Aminoplastharzen (wie z. B. Triazin-Formaldehyd-Harzen); Aminoharzen; Epoxyharzen; Isocyanatharzen; beta-Hydroxy(alkyl)amidharzen; alkylierten Carbamatharzen; Polysäuren; Anhydriden; organometallischen säurefunktionellen Materialien; Polyaminen; Polyamiden und Kombinationen davon.

12. Beschichtungssystem gemäß Anspruch 11, wobei die Vernetzer der Grundierung und/oder der Deckschicht ein Phenolharz und ein Aminoplastharz umfassen.

13. Lebensmittel- oder Getränkebehälter mit einer Beschichtung auf wenigstens einem Teil davon, wobei die Beschichtung von einem Beschichtungssystem gemäß einem der vorstehenden Ansprüche abgeleitet ist.

14. Deckel für einen Lebensmittel- oder Getränkebehälter, wie z. B. Deckel eines Behälters mit einem leicht zu öffnenden Ende, mit einer Beschichtung auf wenigstens einem Teil davon, wobei die Beschichtung von einem Beschichtungssystem gemäß einem der Ansprüche 1 bis 12 abgeleitet ist, wobei die Beschichtung vorzugsweise auf wenigstens einem Teil einer Innenseite des Deckels vorhanden ist.

15. Verwendung eines Beschichtungssystems gemäß einem der Ansprüche 1 bis 12 zum Verringern von Migration.

## Revendications

1. Système de revêtement comprenant :
une composition de sous-couche comprenant :
au moins 50 % en poids de solides d'un (co)polymère de polyester ;
un matériau de réticulation associé,
une composition de couche de finition comprenant :
un (co)polymère de chlorure de polyvinyle (PVC) ;
5 à 80 % en poids de solides d'un (co)polymère de polyester ;
un matériau de réticulation associé,
le système de revêtement ne contenant pratiquement pas de BPA, de BADGE, de BPF et de BFDGE ;
et le système de revêtement ne contenant pratiquement pas de monomères, d'oligomères et de polymères acryliques.

2. Système de revêtement selon la revendication 1, dans lequel la composition de couche de finition comprend de 7 à 60 % en poids de solides d'un (co)polymère de polyester, par exemple 7 à 50 % en poids ou 9 à 35 % en poids de solides d'un (co)polymère de polyester.

3. Système de revêtement selon l'une quelconque des revendications précédentes, le système de revêtement comprenant un matériau de réticulation de résine phénolique, le matériau de réticulation de sous-couche et le matériau de réticulation de couche de finition comprenant préférablement un matériau de réticulation de résine phénolique.

4. Système de revêtement selon l'une quelconque des revendications précédentes, dans lequel le (co)polymère de polyester de la composition de sous-couche est formé d'un polyacide ou d'un dérivé estérifiable associé et d'un polyol, dans lequel le polyacide est sélectionné parmi un ou plusieurs de l'acide phtalique, de l'acide isophtalique, de l'acide téréphtalique, de l'acide 1,4-cyclohexanedicarboxylique, de l'acide succinique, de l'acide sébacique, de l'acide méthyltétrahydrophtalique, de l'acide méthylhexahydrophtalique, de l'acide tétrahydrophtalique, de l'acide dodécanedioïque, de l'acide adipique, de l'acide azélaïque, de l'acide naphtalènedicarboxylique, de l'acide pyromellitique et/ou d'acides gras dimériques, d'anhydrides d'acides de ceux-ci et/ou d'esters alkyliques C₁-C₁₀, par exemple des esters méthyliques ; et dans lequel le polyol est sélectionné parmi un ou plusieurs de l'éthylène glycol, du propylène glycol, (1,2 et/ou 1,3-propanediol), du glycérol, du diéthylène glycol, du dipropylène glycol, du triéthylène glycol, du tétraéthylène glycol, du triméthylolpropane, du triméthyloléthane, du tripropylène glycol, du néopentylglycol, du pentaérythritol, du 1,4-butanediol, du 1,3-butyléthylpropanediol, du 2-méthyl-1,3-propanediol, du 1,5-pentanediol, du cyclohexanediméthanol, du 1,6-hexanediol, du triméthylolpropane, de l'hexylène glycol, du cyclohexanediméthanol, d'un polyéthylène ou polypropylène glycol, de l'isopropylidène bis(p-phénylène-oxopropanol-2), du 1,4-benzyldiméthanol et - éthanol, du 2,4-diméthyl-2-éthylhexane-1,3-diol, et de mélanges de ceux-ci, typiquement un polyacide sélectionné parmi un ou plusieurs de l'acide téréphtalique et/ou de l'acide isophtalique et un polyol sélectionné parmi un ou plusieurs du néopentylglycol, de l'éthylène glycol, du cyclohexanediméthanol et/ou du 1,2-propanediol.

5. Système de revêtement selon l'une quelconque des revendications précédentes, dans lequel le (co)polymère de polyester de la composition de couche de finition est formé d'un polyacide ou d'un dérivé estérifiable associé et d'un polyol, dans lequel le polyacide est sélectionné parmi un ou plusieurs de l'acide phtalique, de l'acide isophtalique, de l'acide téréphtalique, de l'acide 1,4-cyclohexanedicarboxylique, de l'acide succinique, de l'acide sébacique, de l'acide méthyltétrahydrophtalique, de l'acide méthylhexahydrophtalique, de l'acide tétrahydrophtalique, de l'acide dodécanedioïque, de l'acide adipique, de l'acide azélaïque, de l'acide naphtalènedicarboxylique, de l'acide pyromellitique et/ou d'acides gras dimériques, d'anhydrides d'acides de ceux-ci et/ou d'esters alkyliques C₁-C₁₀, par exemple des esters méthyliques ; et dans lequel le polyol est sélectionné parmi un ou plusieurs de l'éthylène glycol, du propylène glycol, (1,2 et/ou 1,3-propanediol), du glycérol, du diéthylène glycol, du dipropylène glycol, du triéthylène glycol, du tétraéthylène glycol, du triméthylolpropane, du triméthyloléthane, du tripropylène glycol, du néopentylglycol, du pentaérythritol, du 1,4-butanediol, du 1,3-butyléthylpropanediol, du 2-méthyl-1,3-propanediol, du 1,5-pentanediol, du cyclohexanediméthanol, du 1,6-hexanediol, du triméthylolpropane, de l'hexylène glycol, du cyclohexanediméthanol, d'un polyéthylène ou polypropylène glycol, de l'isopropylidène bis(p-phénylène-oxopropanol-2), du 1,4-benzyldiméthanol et - éthanol, du 2,4-diméthyl-2-éthylhexane-1,3-diol, et de mélanges de ceux-ci, typiquement un polyacide sélectionné parmi un ou plusieurs de l'acide téréphtalique et/ou de l'acide isophtalique et un polyol sélectionné parmi un ou plusieurs du néopentylglycol, de l'éthylène glycol, du cyclohexanediméthanol et/ou du 1,2-propanediol.

6. Composition de revêtement selon l'une quelconque des revendications précédentes, dans laquelle le (co)polymère de polyester de la composition de couche de finition est formé de 1,2 propanediol et d'acide téréphtalique.

7. Système de revêtement selon l'une quelconque des revendications précédentes, dans lequel le (co)polymère de polyester de la composition de couche de finition comprend le produit réactionnel de :
i. 1,2-propanediol,
ii. acide téréphtalique, et
iii. un agent d'augmentation de la masse moléculaire,
dans lequel le (co)polymère de polyester a une masse moléculaire moyenne en nombre (Mn) d'au moins 6 100 Da et une température de transition vitreuse (Tg) d'au moins 80 °C, la masse moléculaire moyenne en nombre étant déterminée par chromatographie par perméation de gel en utilisant un étalon en polystyrène selon ASTM D6579-11 (« Méthode normalisée pour la détermination des masses moléculaires moyennes et de la distribution de masse moléculaire de résines d'hydrocarbures, de résines de colophane et de résines terpéniques par chromatographie d'exclusion de taille », avec un détecteur UV, 254 nm, en utilisant du THF non stabilisé comme solvant, en utilisant du toluène comme indicateur de temps de rétention, avec une concentration d'échantillon de 2 mg/ml), et la température de transition vitreuse étant mesurée selon ASTM D6604-00(2013) (« Méthode normalisée pour la détermination des températures de transition vitreuse de résines d'hydrocarbures par calorimétrie différentielle à balayage », par calorimétrie différentielle à balayage (DSC) par mesure de flux thermiques, avec des bacs à échantillons en aluminium, en utilisant comme référence un bac vide, en utilisant de l'indium et du mercure pour l'étalonnage, avec un poids d'échantillon de 10 mg, et une vitesse de chauffage de 20 °C/min).

8. Système de revêtement selon l'une quelconque des revendications précédentes, dans lequel le (co)polymère de PVC est présent dans la composition de couche de finition dans une quantité de 10 % en poids à 85 % en poids relativement à la quantité totale de solides de la composition.

9. Système de revêtement selon l'une quelconque des revendications précédentes, le système de revêtement ne contenant pratiquement pas de composés isocyanates.

10. Système de revêtement selon l'une quelconque des revendications précédentes, dans lequel la composition de couche de finition comprend un (co)polymère de chlorure de polyvinyle (PVC).

11. Système de revêtement selon l'une quelconque des revendications précédentes, dans lequel l'agent de réticulation de la sous-couche et/ou de la couche de finition est sélectionné parmi un ou plusieurs des composés suivants : résines phénoliques (ou résines de phénol-formaldéhyde), résines aminoplastes (telles que les résines de triazine-formaldéhyde), résines amino, résines époxydes, résines d'isocyanates, résines de bêta-hydroxy(alkyl)amides, résines de carbamates alkylés, polyacides, anhydrides, matériaux organométalliques à fonctionnalités acides, polyamines, polyamides, et combinaisons de ceux-ci.

12. Système de revêtement selon la revendication 11, dans lequel l'agent de réticulation de la sous-couche et/ou de la couche de finition comprend une résine phénolique et une résine aminoplaste.

13. Récipient destiné à contenir des produits alimentaires ou des boissons, portant un revêtement sur au moins une partie dudit récipient, le revêtement étant dérivé d'un système de revêtement selon l'une quelconque des revendications précédentes.

14. Couvercle pour un récipient destiné à contenir des produits alimentaires ou des boissons, par exemple couvercle d'un récipient à ouverture facile de type « easy open end », portant un revêtement sur au moins une partie dudit couvercle, le revêtement étant dérivé d'un système de revêtement selon l'une quelconque des revendications 1 à 12, le revêtement étant préférablement présent sur au moins une partie d'une face interne du couvercle.

15. Utilisation d'un système de revêtement selon l'une quelconque des revendications 1 à 12 pour réduire la migration.
